(19) Europäisches Patentamt
European Patent Office
Office européen des brevets

(11) **EP 1 207 677 B1**

(12) **EUROPÄISCHE PATENTSCHRIFT**

(45) Veröffentlichungstag und Bekanntmachung des Hinweises auf die Patenterteilung:
**22.04.2009 Patentblatt 2009/17**

(51) Int Cl.:
*H04M 15/00* (2006.01)   *H04M 15/34* (2006.01)
*H04L 12/14* (2006.01)

(21) Anmeldenummer: **01126872.9**

(22) Anmeldetag: **12.11.2001**

(54) **Verfahren zum Erzeugen von Gebühreninformationen in einem Telekommunikationsnetz**

Methode for producing call fee information in a telecommunications network

Procédé pour la génération d'information de frais d'appel dans un réseau de télécommunications

(84) Benannte Vertragsstaaten:
**AT BE CH CY DE DK ES FI FR GB GR IE IT LI LU MC NL PT SE TR**

(30) Priorität: **15.11.2000 DE 10056523**

(43) Veröffentlichungstag der Anmeldung:
**22.05.2002 Patentblatt 2002/21**

(73) Patentinhaber: **Tenovis GmbH & Co. KG 60362 Frankfurt am Main (DE)**

(72) Erfinder:
• **Rauth, Hermann 46145 Oberhausen (DE)**
• **Hempel, Harald 45133 Essen (DE)**

(74) Vertreter: **Tergau & Pohl Patentanwälte Eschersheimer Landstrasse 105-107 60322 Frankfurt am Main (DE)**

(56) Entgegenhaltungen:
**EP-A- 0 526 447       EP-A- 0 905 960
WO-A-96/03832       GB-A- 2 343 325**

## Beschreibung

Die Erfindung betrifft ein Verfahren zum Erzeugen von Gebühreninformationen in einem Telekommunikationsnetz gemäß dem Oberbegriff des Patentanspruchs 1.

In Telekommunikationsnetzen wird zumeist als Zusatzdienst die Übertragung von Gebühreninformationen angeboten. Derartige Gebühreninformationen können beispielsweise in einem Endgerät eines Teilnehmers ausgewertet und angezeigt werden. Bekannt ist die Übertragung des Gebührenimpulses im öffentlichen Telefonnetz, der ein zu vergebührendes Zeitintervall während einer Verbindung, also wenn eine Netzleitung belegt ist, signalisiert. In einem Telefon kann dieser Gebührenimpuls dadurch ausgewertet werden, daß bei jedem im Telefon empfangenen Impuls die Gesprächskosten um den Gebührenbetrag für ein Zeitintervall erhöht werden und ein entsprechender Gesamtbetrag in einem Display des Telefons angezeigt wird. Allerdings wird der Gebührenimpuls nur über Leitungen des öffentlichen Telekommunikationsnetzes übertragen. Insbesondere beim Einsatz von Telekommunikationsanlagen wie private Nebenstellenanlagen wird der Gebührenimpuls häufig aus technischen Gründen nicht an die Endeinrichtungen weitergegeben. Zudem liefern manche Telekommunikationsdienstleister gar keinen Gebührenimpuls.

Einige Telekommunikationsanlagen, die eine Vergebührung zur Verfügung stellen, erzeugen daher selbst Gebühreninformationen.

Die Ermittlung der Gebühren für ein Gespräch bzw, eine belegte Netzleitung wird aufgrund der heutigen Vielzahl an verschiedenen Tarifen üblicherweise anhand der gewählten Rufnummern, des Wochentages und der Tageszeit durchgeführt. Aus der EP 0905960 A ist ein Verfahren bekannt, bei dem zum Erzeugen von Gebühreninformationen in einem Telekommunikationsnetz bei Belegung einer Netzleitung anhand mindestens einer Tabelle eine erste Gebühreninformation zyklisch mit einer Gebührenabstandsdauer erzeugt wird. Weiterhin ist in dieser Schrift offenbart, dass bei der Erzeugung der ersten Gebühreninformation geprüft wird, ob die Änderung der Gesprächsgebühren eine Gebühren - Mindestdifferenz unterschreitet. Im Falle des Unterschreitens, kommt es zu keiner Ausgabe, um das Telekommunikationsnetz zu entlasten. In die Gebührenabstandsdauer im Interesse einer möglichst genauen Nutzungserfassung sehr klein, müssen viele Gebühreninformationen erzeugt und abgesendet werden. Hierdurch wird allerdings die Telekommunikationsanlage und das Telekommunikationsnetz stark belastet.

Aufgabe der vorliegenden Erfindung ist es daher, die Belastung eines Telekommunikationsnetzes und von mit diesem vernetzten Telekommunikationsanlagen aufgrund der Erzeugung von Gebühreninformationen zu verringern.

Diese Aufgabe wird durch ein Verfahren mit den Merkmalen von Patentanspruch 1 gelöst. Bevorzugte Ausgestaltungen der Erfindung ergeben sich aus den abhängigen Patentansprüchen.

Ein wesentlicher Gedanke der Erfindung ist eine flexible Gestaltung der Netzbelastung aufgrund von Gebühreninformationen. Diese wird erreicht durch eine optimale Umwertung der anhand einer Tabelle ermittelten Gebühreninformationen derart, dass deren Gebührenabstandsdauer größer oder gleich einer einstellbaren und an eine Anzahl belegter Netzleitungen angepassten minimalen Gebührenabstandsdauer ist. Der der Erfindung zugrundeliegende Gedanke besteht darin, eine Telekommunikationsanlage durch die Erzeugung von Gebühreninformationen nicht zu überlasten, falls die Gebührenanstandsdauer dieser Gebühreninformationen nach Tarif die minimale Gebührenabstandsdauer unterschreitet, die in diesem Fall die Belastungsgrenze der Telekommunikationsanlage vorgibt. In diesem Fall würde sich die minimale Gebührenabstandsdauer anhand der mit der Telekommunikationsanlage verbundenen Netzleitungen und der in der Telekommunikationsanlage zur Verfügung stehenden Leistung zur Erzeugung von Gebühreninformationen bestimmen.

Nach dem vorgeschlagenen Verfahren zum Erzeugen von Gebühreninformationen in einem Telekommunikationsnetz wird bei Belegung einer netzinternen Leitung anhand mindestens einer Tabelle eines erste Gebühreninformation zyklisch mit einer ersten Gebührenabstandsdauer erzeugt. Dabei ist vorgesehen, dass bei der Erzeugung der ersten Gebühreninformation geprüft wird, ob die erste Gebührenabstandsdauer eine vorbestimmte minimale Gebührenabstandsdauer unterschreitet. Im Falle des Unterschreitens wird dann anstelle der ersten Gebühreninformation eine zweite Gebühreninformation mit einer zweiten Gebührenabstandsdauer erzeugt, die größer ist als die erste Gebührenabstandsdauer. Erfindungsgemäß ist die minimale Gebührenabstandsdauer einstellbar, beispielsweise als Kundendatum. Dabei wird die minimale Gebührenabstandsdauer an die Leistungsfähigkeit eines Telekommunikationsnetzes und/oder von Telekommunikationsanlagen angepasst, speziell ist steigender Anzahl belegter Netzleitungen vergrößert, d. h. dynamisch an die Auslastung des Telekommunikationsnetzes angepasst. Hierdurch wird sichergestellt, dass auch bei einer hohen Belegungsrate von Netzleitungen im Telekommunikationsnetz und damit (zusätzlich) einer hohen Belastung durch die Erzeugung von Gebühreninformationen insgesamt keine Überlastung auftritt. Dies ist gerade dann von Vorteil, wenn angefangene Gebührenintervalle nicht vollständig abgerechnet werden, sondern nach Sekunden oder gar Bruchteilen davon abgerechnet werden sollen.

Die Erfindung bietet den Vorteil, dass die Gebührenabstandsdauer mit der Gebühreninformationen erzeugt werden, einen durch die einstellbare und an die Anzahl belegter Netzleitungen angepasste minimale Gebührenabstandsdauer vorgegebenen Schwellwert nicht unterschreiten, so dass die Gebührenabstandsdauer nicht zu kurz wird und das Telekommunikationsnetz sowie darin geschaltete Telekommunikationsanlagen durch die Erzeugung von Gebühренin-

formationen überlastet. Mit anderen Worten werden die aufgrund der Tabelle vorgegebenen ersten Gebühreninformationen und die entsprechenden ersten Gebührenabstandsdauern in zweite Gebühreninformationen und entsprechende zweite Gebührenabstandsdauer derart umgerechnet, dass die zweite Gebührenabstandsdauer nicht zu klein wird und zumindest größer als die angepasste minimale Gebührenabstandsdauer ist.

Wir die Belegung einer Netzleitung zwischen zwei aufeinanderfolgenden Gebühreninformationen beendet, wird gemäß einer besonders bevorzugten Ausgestaltung des Verfahrens mindestens eine dritte Gebühreninformation erzeugt, die einen Rest-Gebührenbetrag enthält, der seit der letzten erzeugten Gebühreninformation aufgrund der Belegung der Netzleitung angefallen ist.

In einer konkreten Ausgestaltung des Verfahrens wird die zweite Gebührenabstandsdauer GAD2 aus der ersten Gebührenabstandsdauer GAD1 und der minimalen Gebührenabstandsdauer GADMIN mit der folgenden Formel berechnet:

$$\text{GAD2} = ((\text{GADMIN DIV GAD1}) + 1)^* \text{ GAD1}$$

Um den Umrechnungsaufwand von erster Gebühreninformation mit erster Gebührenabstandsdauer auf zweite Gebühreninformation mit zweiter Gebührenabstandsdauer wirksam zu verringern, kann die zweite Gebühreninformation mit der zweiten Gebührenabstandsdauer anhand mindestens einer zweiten Tabelle erzeugt werden.

In dieser Ausgestaltung des erfindungsgemäßen Verfahrens erfolgt sozusagen eine Abbildung der ersten Wertepaare (erste Gebühreninformation, erste Gebührenabstandsdauer) auf zweite Wertepaare (zweite Gebühreninformation, zweite Gebührenabstandsdauer), ohne daß eine Rechenaufwand erfordernde Umrechnung der ersten Werte in die zweiten Werte jeweils aktuell vollzogen werden muß.

Vorzugsweise weist die zweite Tabelle eine Mehrzahl von Paaren auf, die aus einer zweiten Gebühreninformation mit einer zugeordneten zweiten Gebührenabstandsdauer bestehen. Im Rahmen der vorgenannten Abbildung, konkret wenn die erste Gebührenabstandsdauer die minimale Gebührenabstandsdauer unterschreitet, wird durch Auswählen eines geeigneten Paares aus der zweiten Tabelle die zweite Gebühreninformation mit der zweiten Gebührenabstandsdauer erzeugt.

Das erfindungsgemäße Verfahren ist nicht auf private Telekommunikationsnetze beschränkt, sondern kann ebenso in einem öffentlichen Telekommunikationsnetz eingesetzt werden. Vorzugsweise wird allerdings das Verfahren in einer Telekommunikationsanlage, insbesondere einer privaten Nebenstellenanlage verwendet. Die erzeugten Gebühreninformationen werden dann an Telekommunikationseinrichtungen übermittelt, die über Netzleitungen mit der Telekommunikationsanlage verbunden sind. Die Telekommunikationseinrichtungen können beispielsweise einfache Telefonapparate, Datenübertragungseinrichtungen oder andere Telekommunikationsanlagen, beispielsweise kleinere Nebenstellenanlagen, sein.

Eine Telekommunikationsanlage zur Ausführung des erfindungsgemäßen Verfahrens weist entsprechend ausgebildete Mittel auf, die die mindestens eine Tabelle, einen Komparator zum Vergleichen der ersten Gebührenabstandsdauer mit der minimalen Gebührenabstandsdauer, Gebührendaten-Erzeugungsmittel zum Erzeugen der zweiten Gebühreninformation mit der zweiten Gebührenabstandsdauer, einen Timer, der mit einer Gebührenabstandsdauer programmierbar ist, Sendemittel zum zyklischen Aussenden der Gebühreninformation, Erfassungsmittel zum Erfassen der Anzahl belegter Netzleitungen und Einstellmittel zum Einstellen der minimalen Gebührenabstandsdauer in Abhängigkeit von der erfassten Anzahl belegter Netzleitungen umfassen. Damit kann die Telekommunikationsanlage die Erzeugung von Gebühreninformationen an die Netzauslastung anpassen.

Eine typische Telekommunikationsanlage, in der das erfindungsgemäße Verfahren eingesetzt wird, ist als private Nebenstellenanlage ausgebildet. An diese private Nebenstellenanlage sind über Netzleitungen Telekommunikations-Endeinrichtungen, wie beispielsweise Telefonapparate, Datenübertragungseinrichtungen oder dergleichen Endeinrichtungen, angeschlossen. Eine derartige private Nebenstellenanlage kann etwa über 20 Netzleitungen umfassen, über die eine Mehrzahl von Telekommunikations-Endeinrichtungen versorgt werden. Die Einstellmittel zum Einstellen der minimalen Gebührenabstandsdauer in der Telekommunikationsanlage bzw. der privaten Nebenstellenanlage sind dann z.B. derart ausgebildet, dass die minimale Gebührenabstandsdauer bei 0 bis 5 belegten Netzleitungen auf 10 Sekunden, bei 5 bis 20 belegten Netzleitungen auf 15 Sekunden und bei über 20 belegten Netzleitungen auf 20 Sekunden eingestellt ist. Dies hat sich als guter Kompromiss zwischen dem Aufwand zum Einstellen der minimalen Gebührenabstandsdauer in Abhängigkeit der Netzauslastung und der Belastung der privaten Nebenstellenanlage durch die Erzeugung von Gebühreninformationen erwiesen.

Weitere Vorteile und Anwendungsmöglichkeiten der Erfindung ergeben sich aus der nachfolgenden Beschreibung von Ausführungsbeispielen in Verbindung mit den Zeichnungen. Diese zeigen in

3

Fig. 1a     ein Ablaufdiagramm eines ersten Ausführungsbeispiels des erfindungsgemäßen Verfahrens,

Fig. 1b     ein Ablaufdiagramm eines ersten Ausführungsbeispiels des erfindungsgemäßen Verfahrens zum Erzeugen einer dritten Gebühreninformation mit einem Rest-Gebührenbetrag,

Fig. 2     ein Signalisierungs-Diagramm zur Erläuterung des Verbindungsablaufes in einem Telekommunikationsnetz, in dem das erste Ausführungsbeispiel des erfindungsgemäßen Verfahrens eingesetzt wird,

Fig. 3     zwei Zeitdiagramme, die die zeitliche Abfolge des Erzeugens von Gebühreninformationen gemäß dem erfindungsgemäßen Verfahrens darstellen,

Fig. 4a     ein Ablaufdiagramm eines zweiten Ausführungsbeispiels des erfindungsgemäßen Verfahrens,

Fig. 4b     ein Ablaufdiagramm eines zweiten Ausführungsbeispiels des erfindungsgemäßen Verfahrens zur Erzeugung der dritten Gebühreninformation mit einem Rest-Gebührenbetrag, und

Fig. 5     ein Blockschaltbild eines Ausführungsbeispiels einer Telekommunikationsanlage, die zur Ausführung des erfindungsgemäßen Verfahrens ausgebildet ist.

Einige der vorgenannten Figuren sind aufgrund ihrer Beschriftung selbsterklärend, so daß nur auf wesentliche Aspekte des jeweiligen Ausführungsbeispiels im Hinblick auf die Erfindung hingewiesen wird.

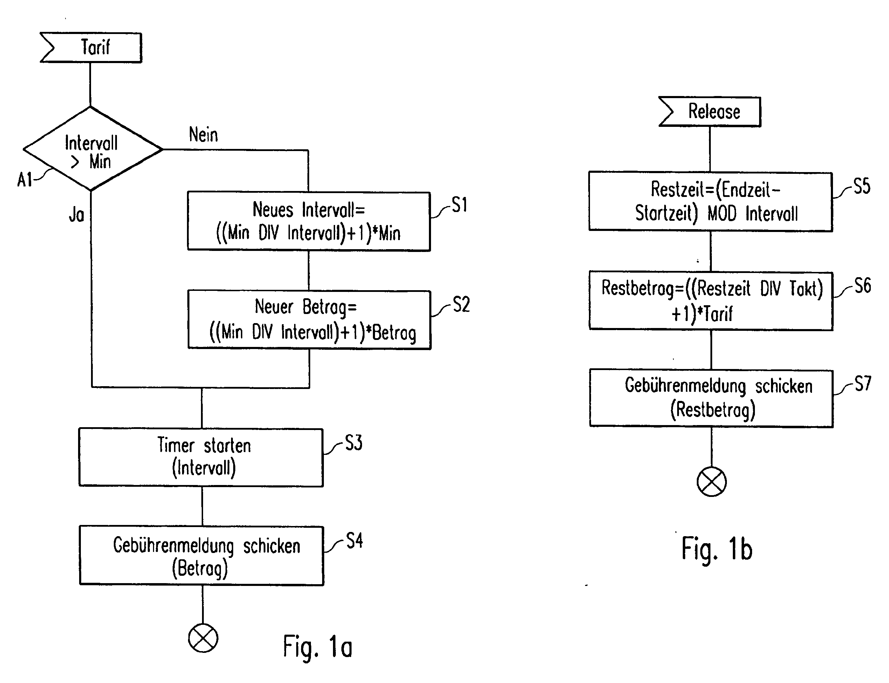

Fig. 1a zeigt anhand eines Ablaufdiagramms die Schrittabfolge eines ersten Ausführungsbeispiels des erfindungsgemäßen Verfahrens. Das Ablaufdiagramm setzt dabei an der Stelle des Verfahrens ein, an der bei Belegung einer Netzleitung anhand mindestens einer Tabelle eine erste Gebühreninformation mit einer ersten Gebührenabstandsdauer ermittelt wurde. In einer derartigen Tabelle ist eine Mehrzahl von ersten Gebühreninformationen und entsprechenden ersten Gebührenabstandsdauern abgelegt, die die vielen verschiedenen Tarife für eine Belegung der Netzleitung abhängig von Datum, Uhrzeit und eventuell gewählter Rufnummer berücksichtigen. Konkret wird bei Belegung der Netzleitung anhand des Datums, der Uhrzeit und der gewählten Rufnummer ein passender Eintrag aus der Tabelle ausgewählt, der aus der ersten Gebühreninformation und der zugeordneten ersten Gebührenabstandsdauer besteht. Beispielsweise kann die erste Gebühreninformation 0,005 DM für eine Gebührenabstandsdauer von 1 Sekunde betragen. Dies ergibt 0,30 DM für eine Belegung von einer Minute der Netzleitung.

Gemäß dem in Fig. 1a dargestellten Ablaufdiagramm wird nun mittels einer Abfrage A1 geprüft, ob das durch die erste Gebührenabstandsdauer vorgegebene Intervall größer als eine vorbestimmte minimalen Gebührenabstandsdauer ist. Ist dies der Fall, wird direkt ein Timer im Schritt S3 gestartet, der in dem durch die erste Gebührenabstandsdauer vorbestimmten Intervall in einem Schritt S4 die erste Gebühreninformation als Gebührenmeldung erzeugt und diese über die belegte Netzleitung an eine Telekommunikations-Endeinrichtung schickt.

Ist dagegen das durch die erste Gebührenabstandsdauer bestimmte Intervall kleiner als die vorbestimmte minimale Gebührenabstandsdauer, wird in einem Schritt S1 eine zweite Gebührenabstandsdauer entsprechend einem neuen Intervall aus der ersten Gebührenabstandsdauer und Intervall und der minimalen Gebührenabstandsdauer Min mit der angegebenenen Formel berechnet. In einem Schritt S2 wird dann eine zweite Gebühreninformation entsprechend einem neuen Betrag aus der ersten Gebühreninformationbetrag und der ersten Gebührenabstandsdauerintervall sowie der minimalen Gebührenabstandsdauer Min mit der angegebenen Formel berechnet.

In Fig. 1b ist ein Ablaufdiagramm dargestellt, das die Erzeugung einer dritten Gebühreninformation mit einem Rest-Gebührenbetrag erläutert, der anfällt, wenn die Belegung der Netzleitung zwischen zwei aufeinanderfolgenden (zweiten)- Gebühreninformationen beendet wird. Hierzu wird in einem Schritt S5 die verstrichene Zeit nach der letzten (zweiten) Gebühreninformation als Restzeit aus der Startzeit und der Endzeit der Belegung sowie der Gebührenabstandsdauerintervall mit der angegebenen Formel berechnet. In einem Schritt S6 wird der entsprechende Rest-Gebührenbetrag bzw. Restbetrag aus der im Schritt S5 berechneten Restzeit und dem Takt sowie dem Tarif für einen Takt berechnet. Schließlich wird in einem Schritt S7 die erzeugte dritte Gebühreninformation als Gebührenmeldung abgeschickt, d. h. an Telekommunikationseinrichtungen zur Auswertung übertragen.

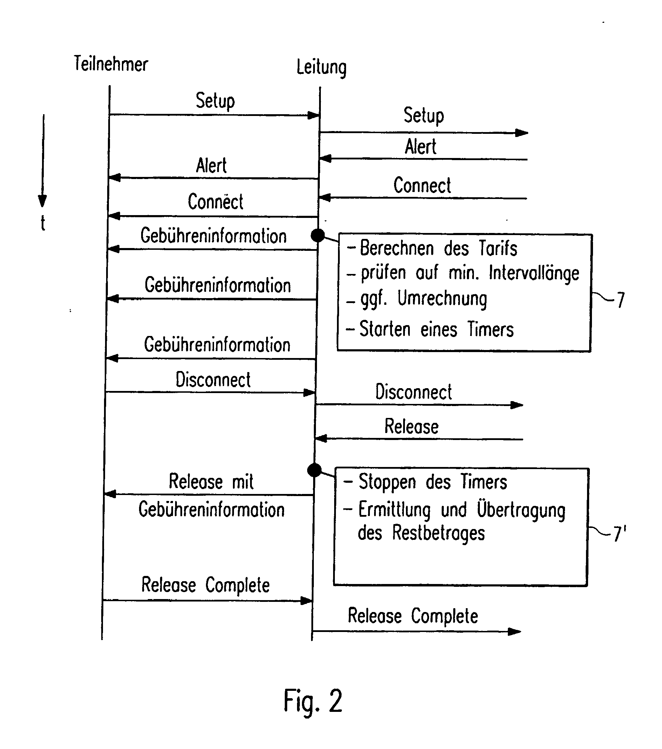

Fig. 2 zeigt die zeitliche Abfolge von Signalisierungen beim Aufbau einer Verbindung, d. h. Belegen einer Netzleitung, und dem Abbau dieser Verbindung, d. h. der Freigabe der belegten Netzleitung. Wesentlich für die Erfindung ist hier, daß zwischen dem Signal "Connect" und dem Abschicken der ersten einer Vielzahl von Gebühreninformationen an den Teilnehmer erfindungsgemäß die im Block 7 aufgelisteten Aufgaben durchgeführt werden: Berechnen des Tarifs anhand der mindestens einen Tabelle; Prüfen, ob die erste Gebührenabstandsdauer eine vorbestimmte minimale Gebührenabstandsdauer unterschreitet (Prüfen auf minimale Intervalllänge); gegebenenfalls eine Umrechnung, d. h. im Falle des Unterschreitens das Erzeugen einer zweiten Gebühreninformation mit einer zweiten Gebührenabstandsdauer; schließlich Starten eines Timers, um zyklisch erste oder zweite Gebühreninformationen mit der ersten bzw. zweiten Gebührenabstandsdauer zu erzeugen. Im Block 7' sind nach der Signalisierung "Release", also wenn die belegte Netzleitung bzw. Leitung wieder freigegeben wird, die folgenden Aufgaben durchzuführen: Stoppen des Timers und Ermittlung und Übertragung des Restbetrages, d. h. Abschicken der dritten Gebühreninformation, die den Rest-Gebührenbetrag aufweist. Die dritte Gebühreninformation wird zusammen mit dem "Release"-Signal an den Teilnehmer abgeschickt.

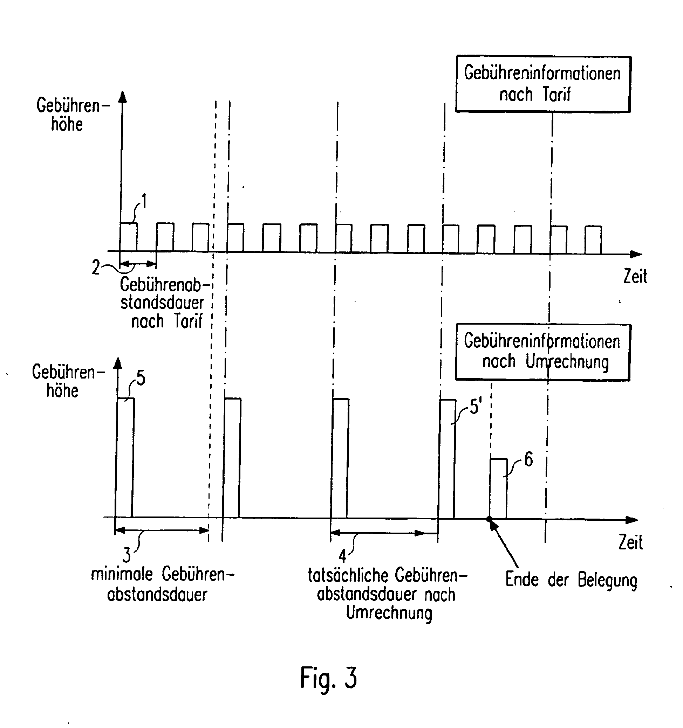

Zwei Zeitdiagramme in Fig. 3 verdeutlichen die Abfolge von übertragenen Gebühreninformationen ohne Anwendung des erfindungsgemäßen Verfahrens (Gebühreninformationen nach Tarif) und bei Verwendung des erfindungsgemäßen Verfahrens (Gebühreninformation nach Umrechnen). Es werden erste Gebühreninformationen 1 mit einer ersten Gebührenabstandsdauer 2 erzeugt, die sich aus dem entsprechenden Tarif anhand der mindestens einen Tabelle ergibt.

Im unteren Diagramm ist eine Folge von zweiten Gebühreninformationen 5 bei Verwendung des erfindungsgemäßen Verfahrens dargestellt. Die zweite Gebührenabstandsdauer 4 der ersten Gebühreninformation 5 ist nun im Gegensatz zu den ersten Gebühreninformationen 1 mit der ersten Gebührenabstandsdauer 2 größer als die vorbestimmte minimale Gebührenabstandsdauer 3, so daß zwischen zwei aufeinanderfolgenden zweiten Gebühreninformationen 5 ein vorbestimmter minimaler Zeitabstand vorgesehen ist. Wie man anhand der beiden Diagramme gut erkennen kann, ist der wesentliche Unterschied zwischen den ersten und zweiten Gebühreninformationen 1 bzw. 5 die mit diesen übertragene Gebührenhöhe. Im unteren Diagramm ist noch eingezeichnet, daß nach einem Ende der Belegung der Netzleitung die dritte Gebühreninformation 6 nach der letzten zweiten Gebühreninformation 5' übertragen wird. Mit der dritten Gebühreninformation 6 wird der noch ausstehende Rest-Gebührenbetrag übertragen, im vorliegenden Fall beträgt dieser etwa die Hälfte des Gebührenbetrages für ein Zeitintervall mit der Länge der zweiten Gebührenabstandsdauer, da das Belegungsende etwa in der Mitte eines derartigen Zeitintervalls stattfindet.

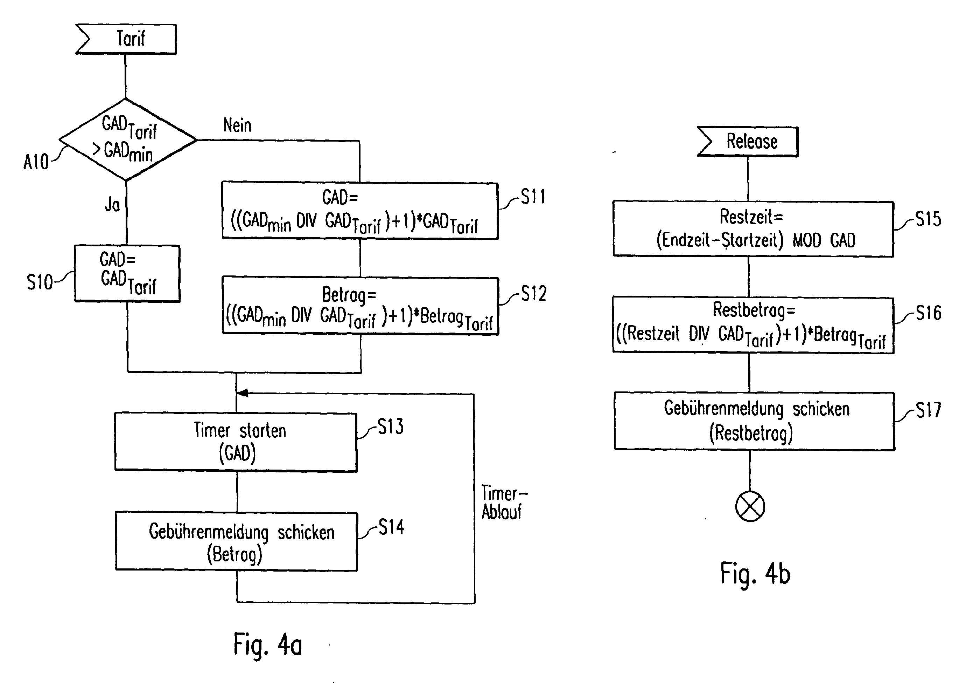

Die Figuren 4a und 4b zeigen jeweils ein Ablaufdiagramm eines zweiten Ausführungsbeispiels des erfindungsgemäßen Verfahrens, das sich von den in den Figuren 1a und 1b dargestellten Ablaufdiagrammen geringfügig unterscheidet. Im folgenden werden kurz die in den beiden Ablaufdiagrammen verwendeten und eingetragenen Abkürzungen erläutert: Mit $GAD_{Tarif}$ wird die erste Gebührenabstandsdauer bezeichnet, die anhand der mindestens einen Tabelle nach dem erfindungsgemäßen Verfahren ermittelt wird; $GAD_{min}$ bezeichnet die vorbestimmte minimale Gebührenabstandsdauer; die tatsächliche Gebührenabstandsdauer, die sich nach Anwendung des erfindungsgemäßen Verfahrens ergibt, ist mit GAD bezeichnet. Die vorgenannten Werte GAD, $GAD_{Tarif}$, $GAD_{min}$ können auch als Register betrachtet werden, in denen entsprechende Werte abgespeichert sind.

Nach Ermittlung der ersten Gebührenabstandsdauer $GAD_{Tarif}$ anhand der mindestens einen Tabelle wird in einem ersten Abfrageschritt A10 ermittelt, ob die erste Gebührenabstandsdauer $GAD_{Tarif}$ größer ist als die vorbestimmte minimale Gebührenabstandsdauer $GAD_{min}$. Hierzu wird ein Vergleich der beiden Registerinhalte durchgeführt.

Ist dies der Fall, wird in dem Register GAD, das für die tatsächliche Gebührenabstandsdauer reserviert ist, die erste Gebührenabstandsdauer $GAD_{Tarif}$ gespeichert (Schritt S10).

Anderenfalls wird aus der ersten Gebührenabstandsdauer $GAD_{Tarif}$ und der minimalen Gebührenabstandsdauer $GAD_{min}$ in einem Schritt S11 gemäß der angegebenen Formel in Modulo-Arithmetik eine zweite Gebührenabstandsdauer berechnet und in dem Register für die tatsächliche Gebührenabstandsdauer GAD gespeichert. Darauffolgend wird in einem Schritt S12 die erste Gebühreninformation $Betrag_{Tarif}$ in eine zweite Gebühreninformation entsprechend der angegebenen Formel in Modulo-Arithmetik umgerechnet und in einem für die tatsächliche Gebühreninformation reservierten Register Betrag gespeichert, wobei die dort bereits vor dem Abfrageschritt A10 abgespeicherte erste Gebühreninformation, die der ersten Gebührenabstandsdauer zugeordnet ist, überschrieben wird.

In dem folgenden Schritt S13 wird nun ein Timer gestartet, der mit der tatsächlichen Gebührenabstandsdauer GAD programmiert ist. Der Timer läuft entsprechend der programmierten Gebührenabstandsdauer und erzeugt am Ende ein Signal, das schließlich den letzten Schritt 14 bewirkt, also das Abschicken der tatsächlichen Gebühreninformation GAD an einen Teilnehmer als Gebührenmeldung (letztendlich den Betrag) bewirkt. Nach dem Abschicken der tatsächlichen Gebühreninformation GAD wird der Timer neu gestartet, so daß zyklisch in zeitlichen Abständen entsprechend der tatsächlichen Gebührenabstandsdauer GAD entsprechende tatsächliche Gebühreninformationen Betrag erzeugt und abgeschickt werden.

In Fig. 4b ist die Erzeugung der dritten Gebühreninformation dargestellt, die einen noch ausstehenden Rest-Gebührenbetrag repräsentiert. Die mit dem noch ausstehenden Rest-Gebührenbetrag zu berechnende Restzeit wird anhand der Endzeit und der Startzeit der Belegung der Netzleitung sowie der tatsächlichen Gebührenabstandsdauer GAD mittels Modulo-Arithmetik ermittelt. Ebenso wird der noch ausstehende Rest-Gebührenbetrag Restbetrag anhand der im Schritt S15 berechneten Restzeit aus der ersten Gebührenabstandsdauer $GAD_{Tarif}$ und der dieser zugeordneten ersten Gebühreninformation $Betrag_{Tarif}$ berechnet (Schritt S16). Im Schritt S17 wird dann die so berechnete dritte Gebühreninformation (Restbetrag) als Gebührenmeldung abgeschickt.

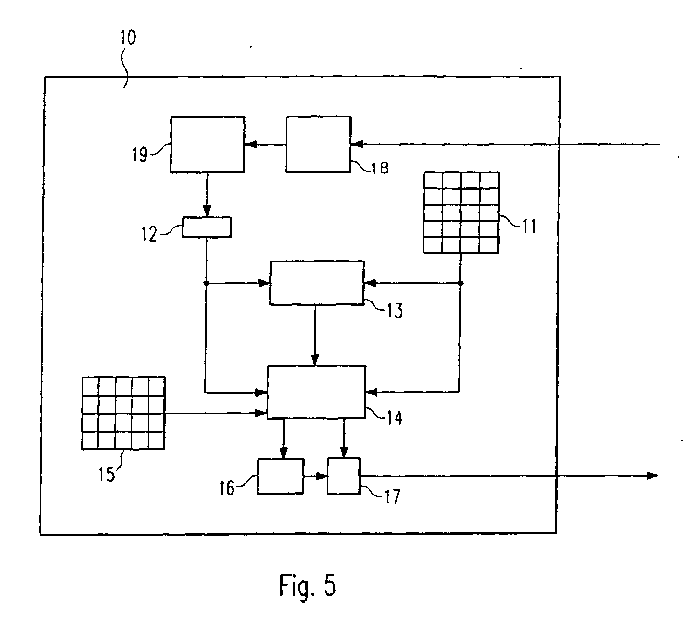

Fig. 5 stellt eine private Nebenstellenanlage 10 dar, in der Mittel vorgesehen sind, die zum Ausführen des erfindungsgemäßen Verfahrens ausgebildet sind. Mit 11 ist die mindestens eine Tabelle bezeichnet, anhand derer die erste Gebühreninformation und die erste Gebührenabstandsdauer nach Tarif ermittelt wird. Die vorbestimmte minimale Gebührenabstandsdauer ist in einem Register 12 gespeichert. Ein Komparator 13 führt die Überprüfung durch, ob die anhand der Tabelle 11 ermittelte erste Gebührenabstandsdauer kleiner als die in dem Register 12 gespeicherte minimale Gebührenabstandsdauer ist. Ist dies der Fall, erzeugt der Komparator 13 ein Signal, das Gebührendaten-Erzeugungsmittel 14 zum Erzeugen der zweiten Gebühreninformation zugeführt wird. Diese erzeugen aus der ersten Gebührenabstandsdauer, der minimalen Gebührenabstandsdauer und der ersten Gebühreninformation, die ebenfalls anhand der Tabelle 11 ermittelt wurde, eine zweite Gebühreninformation mit Hilfe einer zweiten Tabelle 15. In der zweiten Tabelle 15 ist eine Mehrzahl von Paaren bzw. Tupeln gespeichert, die aus einer zweiten Gebühreninformation mit einer zugeordneten zweiten Gebührenabstandsdauer bestehen. Auf Grundlage der ersten Gebührenabstandsdauer, der minimalen Gebührenabstandsdauer und der ersten Gebühreninformation wählen nun die Gebührendaten-Erzeugungsmittel 14 aus der zweiten Tabelle 15 ein entsprechendes Paar aus. Ist aber die erste Gebührenabstandsdauer kleiner als die minimale Gebührenabstandsdauer, werden die anhand der Tabelle 11 ermittelte erste Gebühreninformation und erste Gebührenabstandsdauer für das Erzeugen von Gebühreninformationen herangezogen.

Die nunmehr von den Gebührendaten-Erzeugungsmitteln 14 ausgewählte oder ermittelte erste bzw. zweite Gebührenabstandsdauer wird an einen Timer 16 übertragen. Mit anderen Worten wird der Timer 16 mit der entsprechenden Gebührenabstandsdauer programmiert. Ebenso wird die ausgewählte oder ermittelte erste bzw. zweite Gebühreninformation an Sendemittel 17 zum zyklischen Aussenden der Gebühreninformation übertragen. Der Timer 16 steuert die Sendemittel 17 so, daß zyklisch in Zeitabständen entsprechend der an den Timer 16 übertragenen Gebührenabstandsdauer die entsprechenden Gebühreninformationen abgeschickt werden.

Die Erzeugung von Gebühreninformationen wird dadurch vorgenommen, daß ferner die Auslastung der Netzleitungen, die mit der privaten Nebenstellenanlage 10 verbunden sind, gemessen wird. Hierzu sind Erfassungsmittel 18 zum Erfassen der Anzahl belegter Netzleitungen vorgesehen. Mit anderen Worten bestimmen die Erfassungsmittel 18, wie viele der mit der privaten Nebenstellenanlage verbundenen Netzleitungen gerade belegt, d. h. im Betrieb sind. Die ermittelte Anzahl wird von den Erfassungsmitteln 18 an Einstellmittel 19 zum Einstellen der minimalen Gebührendauer übertragen. Die Einstellmittel 19 bestimmen nach einem Algorithmus eine minimale Gebührenabstandsdauer berechnen, die an die Anzahl der belegten Netzleitungen angepaßt ist.

Für typische private Nebenstellenanlagen im SOHO(Small Office-Home Office)-Bereich hat sich der im folgenden grob skizzierte Algorithmus als besonders effizient erwiesen: Die minimale Gebührenabstandsdauer wird bei 0 bis 5 belegten netzinternen Leitungen auf 10 Sekunden, bei 5 bis 20 netzinternen Leitungen auf 15 Sekunden und bei über 20 belegten netzinternen Leitungen auf 20 Sekunden eingestellt. Hierdurch wird die Belastung der privaten Nebenstellenanlage 12 durch die Erzeugung von Gebühreninformationen in Abhängigkeit von der Anzahl belegter Netzleitungen wesentlich reduziert. Diese Regelung, d. h. die Einstellung der minimalen Gebührenabstandsdauer in Abhängigkeit belegter Netzleitungen, gemäß einer nicht linearen Kennlinie erfolgen.

Die Ausführung der Erfindung ist nicht auf die beschriebenen Beispiele und oben hervorgehobenen Aspekte beschränkt, sondern im Rahmen der Ansprüche ebenso in einer Vielzahl von Abwandlungen möglich, die im Rahmen fachgemäßen Handelns liegen.

**Bezugszeichenliste**

| | |
|---|---|
| 1 | erste Gebühreninformation |
| 2 | erste Gebührenabstandsdauer |
| 3 | minimale Gebührenabstandsdauer |
| 4 | zweite Gebührenabstandsdauer |
| 5 | zweite Gebühreninformation |
| 5' | letzte Gebühreninformation |
| 6 | dritte Gebühreninformation |
| 7, 7', 8, 8' | Schritte des erfindungsgemäßen Verfahrens |
| 10 | private Nebenstellenanlage |
| 11 | Tabelle |
| 12 | Register |
| 13 | Komparator |
| 14 | Gebührendaten-Erzeugungsmittel |
| 15 | zweite Tabelle |
| 16 | Timer |
| 17 | Sendemittel |
| 18 | Erfassungsmittel |
| 19 | Einstellmittel |

**Patentansprüche**

1. Verfahren zum Erzeugen von Gebühreninformationen in einem Telekommunikationsnetz, mit dem bei Belegung einer Netzleitung anhand mindestens einer Tabelle eine erste Gebühreninformation (1) zyklisch mit einer ersten Gebührenabstandsdauer (2) erzeugt wird, wobei bei der Erzeugung der ersten Gebühreninformation (1) geprüft wird (A1), ob die erste Gebührenabstandsdauer (2) eine vorbestimmte minimale Gebührenabstandsdauer (3) unterschreitet, und wobei im Falle des Unterschreitens anstelle der ersten Gebühreninformation (1) eine zweite Gebühreninformation (5) mit einer zweiten Gebührenabstandsdauer (4), die größer ist als die erste Gebührenabstandsdauer (2), erzeugt wird (S1, S2), **dadurch gekennzeichnet, dass**
die minimale Gebührenabstandsdauer (3) einstellbar ist, und die minimale Gebührenabstandsdauer (3) mit steigender Anzahl belegter Netzleitungen vergrößer wird.

2. Verfahren nach Anspruch 1, **dadurch gekennzeichnet, dass**
nach Beendigung der Belegung einer Netzleitung gegebenenfalls mindestens eine dritte Gebühreninformation (6) mit einem Rest-Gebührenbetrag, der seit der letzten Gebühreninformation (5') angefallen ist, erzeugt wird.

3. Verfahren nach einem der vorhergehenden Ansprüche, **dadurch gekennzeichnet, dass**
die zweite Gebührenabstandsdauer GAD2 (4) aus der ersten Gebührenabstandsdauer GAD1 (2) und der minimalen Gebührenabstandsdauer GADMIN (3) mit der folgenden Formel berechnet wird:

$$GAD2 = ((GADMIN\ DIV\ GAD1) + 1)\ {}^*GAD1.$$

4. Verfahren nach einem der Ansprüche 1 oder 2, **dadurch gekennzeichnet, dass** die zweite Gebühreninformation (5) mit einer zweiten Gebührenabstandsdauer (4) anhand mindestens einer zweiten Tabelle erzeugt wird.

5. Verfahren nach Anspruch 4, **dadurch gekennzeichnet, dass**
die zweite Tabelle eine Mehrzahl von Paaren bzw. Tupeln, die aus einer zweiten Gebühreninformation (5) mit einer zugeordneten zweiten Gebührenabstandsdauer (4) bestehen, aufweist, und im Falle des Unterschreitens die zweite Gebühreninformation (5) mit der zweiten Gebührenabstandsdauer (4) durch Auswählen eines geeigneten Paares bzw. Tupels aus der Tabelle erzeugt wird.

6. Verwendung des Verfahrens nach einem der vorhergehenden Ansprüche in einem öffentlichen Telekommunikationsnetz.

7. Verwendung des Verfahrens nach einem der Ansprüche 1 bis 5 in einer Telekommunikationsanlage, insbesondere einer privaten Nebenstellenanlage (12), wobei die erzeugten Gebühreninformationen (1, 5) an Telekommunikationseinreichtungen übermittelt werden, die über Netzleitungen mit der Telekommunikationsanlage verbunden sind.

8. Telekommunikationsanlage, die Mittel aufweist, die zur Ausführung des Verfahrens nach einem der Ansprüche 1 bis 5 ausgebildet sind, wobei die Mittel

- die mindestens eine Tabelle (11),
- einen Komparator (13) zum Vergleichen einer ersten Gebührenabstandsdauer (2) mit der minimalen Gebührenabstandsdauer (3),
- Gebührendaten-Erzeugungsmittel (14) zum Erzeugen einer zweiten Gebühreninformation (5) mit einer zweiten Gebührenabstandsdauer (4),
- Einen Timer (16), der mit einer Gebührenabstandsdauer (2, 4) programmierbar ist,
- Sendemittel (17) zum zyklischen Aussenden der Gebühreninformation (1, 5) und
- Erfassungsmittel (18) zum Erfassen der Anzahl belegter Netzleitungen, und eingangsseitig mit diesen verbundene
- Einstellmittel (19) zum Einstellen der minimalen Gebührenabstandsdauer (3) in Abhängigkeit von der erfassten Anzahl belegter Netzleitungen

umfassen.

9.  Telekommunikationsanlage nach Anspruch 8, **dadurch gekennzeichnet, dass**

    - diese als private Nebenstellenanlage (10) ausgebildet ist,
    - die Netzleitungen Telekommunikations-Endeinrichtungen mit der Nebenstellenanlage verbinden, und
    - die Einstellmittel (19) zum Einstellen der minimalen Gebührenabstandsdauer (3) derart ausgebildet sind, dass die minimale Gebührenabstandsdauer (3) bei 0 bis 5 belegten Netzleitungen auf 10 Sekunden, bei 5 bis 20 belegten Netzleitungen auf 15 Sekunden und bei über 20 belegten Netzleitungen auf 20 Sekunden eingestellt ist.

**Claims**

1.  Method for generating call-fee information in a telecommunications network, by which, when a network line is occupied, a first call-fee information (1) is cyclically generated, by means of at least one table, with a first call-fee interval duration (2), it being checked (A1) upon generation of the first call-fee information (1) whether the first call-fee interval duration (2) falls below a predetermined minimum call-fee interval duration (3) and if so, a second call-fee information (5) with a second call-fee interval duration (4), which is longer than the first call-fee interval duration (2), being generated (S1, S2) instead of the first call-fee information (1), **characterized in that** the minimum call-fee interval duration (3) is adjustable and the minimum call-fee interval duration (3) increases with an increasing number of occupied network lines.

2.  Method according to claim 1, **characterized in that** after termination of the occupation of a network line, if necessary, at least a third call-fee information (6) with a remaining call-fee amount, accrued since the last call-fee information (5'), is generated.

3.  Method according to any of the preceding claims, **characterized in that** the second call-fee interval duration GAD2 (4) is calculated from the first call-fee interval duration GAD1 (2) and the minimum call-fee interval duration GADMIN (3), according the following formula:

$$\text{GAD2} = ((\text{GADMIN DIV GAD1}) + 1) * \text{GAD1}.$$

4.  Method according to any of claims 1 or 2, **characterized in that** the second call-fee information (5) is generated with a second call-fee interval duration (4) by means of at least a second table.

5.  Method according to claim 4, **characterized in that** the second table includes a plurality of pairs or entities consisting of a second call-fee information (5) with an associated second call-fee interval duration (4), and that, if the first call-fee interval duration falls short of the minimum call-fee interval duration, the second call-fee information (5) with the second call-fee interval duration (4) is generated by selecting an appropriate pair or entity from the table.

6.  Employment of the method according to any of the preceding claims in a public telecommunications network.

7.  Employment of the method according to any of claims 1 to 5 in a telecommunications system, in particular a private branch exchange (12), the call-fee information (1, 5) generated being transmitted to telecommunications devices which are connected via network lines with the telecommunications system.

8.  Telecommunications system including means designed for executing the method according to any of claims 1 to 5, said means comprising

    - the at least one table (11),
    - a comparator (13) for comparing a first call-fee interval duration (2) with a minimum call-fee interval duration (3),
    - call-fee data generation means (14) for generating a second call-fee information (5) with a second call-fee interval duration (4),
    - a timer (16) programmable with a call-fee interval duration (2, 4),
    - transmission means (17) for cyclically transmitting the call-fee information (1, 5), and
    - detection means (18) for detecting the number of occupied network lines, and

- adjustment means (19), connected to the input side of the detection means (18), for adjusting the minimum call-fee interval duration (3) as a function of the detected number of occupied network lines.

9. Telecommunications system according to claim 8, **characterized in that**

- it is designed as a private branch exchange (10),
- the network lines connect telecommunications terminals with the private branch exchange, and
- the adjustment means (19) for adjusting the minimum call-fee interval duration (3) are designed such that the minimum call-fee interval duration (3) is adjusted to 10 seconds in case of 0 to 5 occupied network lines, to 15 seconds in case of 5 to 20 occupied network lines, and to 20 seconds in case of more than 20 occupied network lines.

**Revendications**

1. Procédé pour la génération d'informations de frais d'appel dans un réseau de télécommunications, par lequel, lorsqu'une ligne de réseau est occupée, une première information de frais d'appel (1) est générée cycliquement, à l'aide d'au moins une table, avec une première durée d'intervalle de frais d'appel (2), il étant vérifié (A1) lors de la génération de la première information de frais d'appel (1) si la première durée d'intervalle de frais d'appel (2) est inférieure à une durée minimale d'intervalle de frais d'appel (3) prédéfinie et si c'est le cas, une deuxième information de frais d'appel (5) avec une deuxième durée d'intervalle de frais d'appel (4), qui est plus long que la première durée d'intervalle de frais d'appel (2), étant générée (S1, S2) au lieu de la première information de frais d'appel (1), **caractérisé en ce que**
la durée minimale d'intervalle de frais d'appel (3) est ajustable et la durée minimale d'intervalle de frais d'appel (3) croît avec un nombre croissant de lignes de réseau occupées.

2. Procédé selon la revendication 1, **caractérisé en ce que,**
après la fin de l'occupation d'une ligne de réseau, le cas échéant, au moins une troisième information de frais d'appel (6) avec un montant restant de frais d'appel, échu depuis la dernière information de frais d'appel (5'), est générée.

3. Procédé selon l'une quelconque des revendications précédentes, **caractérisé en ce que**
la deuxième durée d'intervalle de frais d'appel GAD2 (4) est calculée à partir de la première durée d'intervalle de frais d'appel GAD1 (2) et la durée minimale d'intervalle de frais d'appel GADMIN (3), selon la formule suivante:

$$\text{GAD2} = ((\text{GADMIN DIV GAD1}) + 1) * \text{GAD1}.$$

4. Procédé selon l'une quelconque des revendications 1 ou 2, **caractérisé en ce que**
la deuxième information de frais d'appel (5) est générée avec une deuxième durée d'intervalle de frais d'appel (4) à l'aide d'au moins une deuxième table.

5. Procédé selon la revendication 4, **caractérisé en ce que**
la deuxième table comprend une pluralité de paires ou de tuples consistant en une deuxième information de frais d'appel (5) avec une deuxième durée d'intervalle de frais d'appel (4) y affectée, et que, si la première durée d'intervalle de frais d'appel est inférieure à la durée minimale d'intervalle de frais d'appel, la deuxième information de frais d'appel (5) avec la deuxième durée d'intervalle de frais d'appel (4) est généré en sélectionnant une paire ou un tuple approprié de la table.

6. Emploi du procédé selon l'une quelconque des revendications précédentes dans un réseau public de télécommunications.

7. Emploi du procédé selon l'une quelconque des revendications 1 à 5 dans un système de télécommunications, en particulier une installation téléphonique privée (12), les informations de frais d'appel (1, 5) générées étant transmises à des dispositifs de télécommunications connectés par des lignes de réseau avec le système de télécommunications.

8. Système de télécommunications comprenant des moyens destinés à exécuter le procédé selon l'une quelconque des revendications 1 à 5, les moyens comprenant

- la au moins une table (11),
- un comparateur (13) pour la comparaison d'une première durée d'intervalle de frais d'appel (2) avec une durée minimale de l'intervalle de frais d'appel (3),
- des moyens de génération de données de frais d'appel (14) pour la génération d'une deuxième information de frais d'appel (5) avec une deuxième durée d'intervalle de frais d'appel (4),
- un timer (16) programmable avec une durée d'intervalle de frais d'appel (2, 4),
- des moyens de transmission (17) pour transmettre cycliquement les informations de frais d'appel (1, 5), et
- des moyens de saisie (18) pour la saisi du nombre de lignes de réseau occupées, et
- des moyens de réglage (19), connectés au côté d'entrée des moyens de saisie (18), pour le réglage de la durée minimale de l'intervalle de frais d'appel (3) en fonction du nombre saisi de lignes de réseau occupées.

9. Système de télécommunications selon la revendication 8, **caractérisé en ce que**

- il est conçu comme une installation téléphonique privée (10),
- les lignes de réseau connectent des ensembles terminaux de télécommunications avec l'installation téléphonique privée, et
- les moyens de réglage (19) pour le réglage de la durée minimale de l'intervalle de frais d'appel (3) sont conçus de façon que la durée minimale de l'intervalle de frais d'appel (3) est réglée sur 10 secondes pour 0 à 5 lignes de réseau occupées, sur 15 secondes pour 5 à 20 lignes de réseau occupées, et à 20 secondes pour plus de 20 lignes de réseau occupées.

EP 1 207 677 B1

**Tarif**

A1 Intervall > Min

Nein

Ja

S1 Neues Intervall= ((Min DIV Intervall)+1)*Min

S2 Neuer Betrag= ((Min DIV Intervall)+1)*Betrag

S3 Timer starten (Intervall)

S4 Gebührenmeldung schicken (Betrag)

⊗

**Fig. 1a**

**Release**

S5 Restzeit=(Endzeit- Startzeit) MOD Intervall

S6 Restbetrag=((Restzeit DIV Takt) +1)*Tarif

S7 Gebührenmeldung schicken (Restbetrag)

⊗

**Fig. 1b**

Teilnehmer                    Leitung

Setup
Setup

Alert

Alert

Connect

Alert

Connect

Connect

Gebühreninformation ●
┌─────────────────────────────┐
│ – Berechnen des Tarifs       │
│ – prüfen auf min. Intervallänge │
│ – ggf. Umrechnung          │  ～7
│ – Starten eines Timers      │
└─────────────────────────────┘
Gebühreninformation

Gebühreninformation

Disconnect
Disconnect

Release

Release mit ●
┌─────────────────────────────┐
│ – Stoppen des Timers         │
│ – Ermittlung und Übertragung │
│   des Restbetrages          │  ～7'
│                             │
│                             │
└─────────────────────────────┘
Gebühreninformation

Release Complete
Release Complete

t

## Fig. 2

Gebührenhöhe

Gebühreninformationen
nach Tarif

1

2
Gebührenabstandsdauer
nach Tarif

Zeit

Gebührenhöhe

5

Gebühreninformationen
nach Umrechnung

5'

6

Ende der Belegung

3
minimale Gebührenabstandsdauer

4
tatsächliche Gebührenabstandsdauer nach
Umrechnung

Zeit

## Fig. 3

Fig. 4b

**S15:** Restzeit = (Endzeit−Startzeit) MOD GAD

**S16:** Restbetrag = ((Restzeit DIV $GAD_{Tarif}$)+1)*$Betrag_{Tarif}$

**S17:** Gebührenmeldung schicken (Restbetrag)

Release

Fig. 4a

Tarif

**A10:** $GAD_{Tarif} > GAD_{min}$

Nein / Ja

**S11:** GAD = (($GAD_{min}$ DIV $GAD_{Tarif}$)+1)*$GAD_{Tarif}$

**S12:** Betrag = (($GAD_{min}$ DIV $GAD_{Tarif}$)+1)*$Betrag_{Tarif}$

**S10:** GAD = $GAD_{Tarif}$

**S13:** Timer starten (GAD)

**S14:** Gebührenmeldung schicken (Betrag)

Timer−Ablauf

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0905960 A